# EUROPEAN PATENT SPECIFICATION

(11) **EP 2 130 713 B1**
(45) Date of publication and mention of the grant of the patent: **25.05.2011**
(21) Application number: 09161614.4
(22) Date of filing: 01.06.2009
(51) Int. Cl.: B60N 2/00, B62J 1/12, B62J 1/28

(54) **System for detecting the occupant of a vehicle seat**
System zur Erkennung eines Insassen eines Fahrzeugsitzes
Système de détection de l'occupant d'un siège de véhicule

(30) Priority: 03.06.2008 IT MI20081011
(43) Date of publication of application: 09.12.2009
(73) Proprietor: PIAGGIO & C. S.p.A., 56025 Pontedera (Pisa) (IT)
(72) Inventor: Gracci, Alberto, 56025, Pontedera PI (IT); Guidi, Emiliano, 57014, Vicarello LI (IT)
(74) Representative: Coletti, Raimondo

(56) References cited:
- EP-A- 0 592 319
- DE-A1- 10 145 370
- JP-A- 1 202 587
- US-A1- 2004 090 338

## Description

The present invention refers to a system for detecting the occupant of a vehicle seat and, more particularly, to a system able to detect the presence of the driver and/or of the passenger on the saddle of a motor vehicle, such as, for example, a motor scooter.

In modern vehicles, detecting systems which indicate whether the driver and/or possible passengers are on the vehicle, integrated inside the seats, are increasingly widespread. In general, such detecting systems are able to determine the activation of particular devices present inside the vehicle according to whether the vehicle itself is occupied or not by the driver or by one or more passengers.

These detecting systems can also be applied to motorcycle saddles and can be used, for example, to stop the ignition of the motor or to deactivate the electric apparatuses installed on the motor vehicle if the driver is not detected sitting on the saddle of the motor vehicle itself.

Spanish patent No. 2 214 082 B2 describes, as an example, a hinge structure for the saddle of a motor vehicle, in which the saddle is able to open with respect to the body of the motor vehicle itself, thanks to a hinge mechanism. On the body of the motor vehicle, under the saddle and at the relative hinge mechanism, a push button switch is foreseen, able to be actuated thanks to the vertical translation of the saddle due to the presence of the driver. When the saddle is in its closed position, without however having a person on it, a laminated spring supports the saddle in its resting position and the switch button is not pressed. On the other hand, when a person is sitting on the saddle, the laminated spring yields under the weight of the person and the saddle translates vertically downwards pressing the switch button. However, in the practical embodiment of a device like the one described in Spanish patent No. 2 214 082 B2 it is necessary for the relative possible movement and tolerances which can occur between the saddle and the portion of body of the vehicle under it, in other words, the portion on which the push button switch is foreseen, to be reduced to the minimum. Otherwise, it is possible that the switch will not work properly, by not correctly indicating the presence of a person sitting on the saddle and not allowing the devices connected to it to be activated or deactivated.

DE 101 45 370 A1 describes a system for detecting the occupant of a vehicle seat according to the preamble of claim 1. Other systems for detecting the occupant of a vehicle seat are disclosed, for example, in documents US 2004/090338 A1, EP 0 592 319 A and JP 01 202587 A.

The purpose of the present invention is therefore that of solving the problems of the prior art, by making a system able to detect in a precise way whether there is a driver and/or a passenger on the seat of a vehicle, in particular the saddle of a motorcycle or of a motor scooter, irrespective of possible play or misalignment which can occur between the seat and the vehicle.

Another purpose of the invention is that of making a system for detecting the occupant of a vehicle seat which can be applied in the same way to both fixed seats and to seats which are mobile with respect to the body of the vehicle itself.

Yet another purpose of the invention is that of making a particularly simple and cost-effective system for detecting the occupant of a vehicle seat.

These purposes according to the present invention are achieved by making a system for detecting the occupant of a vehicle seat and, more in particular, a system able to detect the presence of the driver and/or of the passenger on the saddle of a motor vehicle, such as, for example, a motor scooter, as outlined in claim 1.

Further characteristics of the invention are highlighted in the subsequent claims.

The characteristics and the advantages of a system for detecting the occupant of a vehicle seat according to the present invention shall become clearer from the following description, given as an example and not for limiting purposes, referring to the attached schematic drawings in which:
Figure 1 is a detailed view in cross-section of a system for detecting the occupant of a vehicle seat according to the present invention, in particular applied to the seat of a motor vehicle and shown in the resting position of the seat itself, in other words without the presence of a person; and
Figure 2 is a detailed view in cross-section of the system of figure 1, applied to the seat of a motor vehicle in its open position.

With reference to the figures, a detecting system according to the invention is shown, applied to a seat 10 which, in this case, is represented by the saddle of a motorcycle or of a motor scooter.

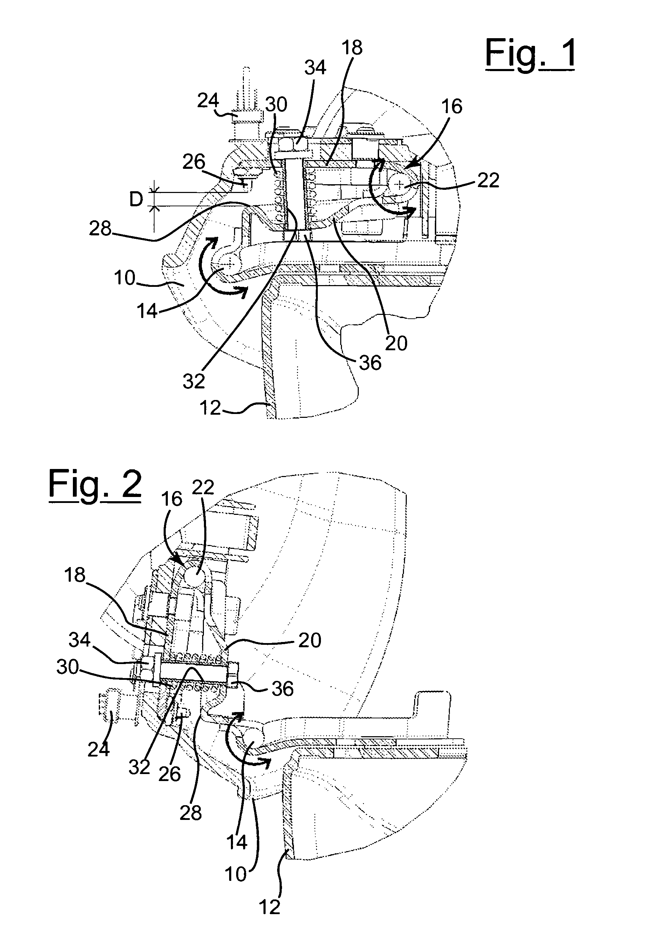

In the illustrated embodiment, the saddle 10 is fastened to the frame 12 of the vehicle through a hinge mechanism 14, so that the saddle 10 itself can rotate with respect to the frame 12 to be brought into the open position, as shown in figure 2, for example, to gain access to a glove or helmet compartment formed in the vehicle underneath it. In any case, the saddle 10 can also be fixedly mounted with respect to the frame 12 of the vehicle without for this reason departing from the scope of protection of the present invention. According to the invention, inside the saddle 10, at least one flexible element 16 is inserted, configured to have a U-shaped section and arranged along a substantially horizontal direction, so that a first portion or horizontal upper shank 18 of such a flexible U-shaped element 16 is fixedly connected to the saddle 10, whereas a second portion, or horizontal lower shank 20, is fixedly connected to the frame 12 of the vehicle or, in the case of a saddle 10 which can open, to the hinge mechanism 14 in turn fixed to the frame 12 of the vehicle. The two portions, upper and lower 18, 20, of the flexible U-shaped element 16 are hinged around a pin 22 arranged horizontally inside the "body" of the flexible element 16 itself. In this way, the upper portion 18 and the lower portion 20 can move closer together or further apart from each other according to whether there is a person sitting on the saddle 10 or not.

On the upper portion 18 of the flexible U-shaped element 16 at least one switch means 24 is fastened, from which a button 26 extends vertically downwards facing onto the lower portion 20 of the flexible element 16 itself. On such a lower portion 20 a shaped abutment surface 28 can therefore be formed, suitable for coming into contact with the button 26 to keep it pressed when at least one person is sitting on the saddle 10, as shall be specified more clearly hereafter.

Preferably, between the upper portion 18 and the lower portion 20 of the flexible U-shaped element 16, at least one elastic element 30 can be arranged, made in the form of a torsion spring in the illustrated embodiment, which extends in a substantially vertical direction and which operates by compression between said upper portion 18 and lower portion 20. The function of the elastic element 30 is that of keeping the upper portion 18 and lower portion 20 of the flexible element 16, suitably spaced apart, so as to not mistakenly activate the switch means 24, when the saddle 10 is not occupied by a person but, for example, when, objects of considerable weight, but still less than that of a person, are placed resting on the saddle 10 itself.

The spring 30 has a spindle 32 passing straight through it, fastened to the upper portion 18 and lower portion 20 of the flexible element 16 through an adjustable stop nut 34 and 36, respectively. In such a way it can be possible to adjust the distance between said upper portion 18 and lower portion 20, as well as the compression force of the spring 30, by simply acting upon one or both of the stop nuts 34 and 36.

The operation of a system for detecting the occupant of a vehicle seat like the one according to the present invention is therefore obvious. When the saddle 10 is in its closed position and there is not anyone sitting on it, the upper portion 18 and lower portion 20 of the flexible element 16 are spaced apart, also thanks to the action of the spring 30. The button 26 of the switch means 24 is therefore a certain distance D (figure 1) from its abutment surface 28, such a distance D being sufficient for the button 26 itself to not be able to be pressed in any condition of the saddle 10 apart from that which foresees the presence of a person sitting on it.

When at least one person is correctly sitting on the saddle 10, the spring 30 yields under the weight of the person, the saddle deforms translating vertically downwards and the distance D, which separates the button 26 of the switch means 24 from the lower portion 20 of the elastic element 16, is nullified. Consequently, the button 26 is pressed to activate the circuit or the circuits connected to the switch means 24.

It should be noted that, in the case in which the detecting system is applied to saddles able to be opened with respect to the vehicle, any possible angular rotation or misalignment of the saddle with respect to the frame or the body of the vehicle itself does not affect the proper operation of the system, since all the elements that form it, including the switch means, are fixedly connected to the saddle and are free from the underlying frame. The same arguments are all the more valid if the saddle is fixed with respect to the vehicle.

It has thus been seen that the system for detecting the occupant of a vehicle seat according to the present invention, intended in particular, but not necessarily, to be used on the saddle of a motor vehicle such as, for example, a motor scooter, achieves the purposes previously highlighted, operating in a precise way in any condition of use and irrespective of the type of seat onto which it is applied.

In practice the materials used, as well as the shapes and sizes, can be whatever according to the technical needs.

The scope of protection of the invention is thus defined by the attached claims.

## Claims

1. System for detecting the occupant of a vehicle seat (10), wherein inside of said seat (10) at least one flexible U-shaped element (16) is inserted and arranged along a substantially horizontal direction, a first upper portion (18) of said flexible element (16) being fixedly connected to said seat (10) and a second lower portion (20) of said flexible element (16) being fixedly connected to the frame (12) of said vehicle, said first upper portion (18) of said flexible element (16) having at least one switch means (24) fastened to it, from which a button (26) extends vertically downwards facing onto said second lower portion (20) of said flexible element (16), said second lower portion (20) of said flexible element (16) having a shaped abutment surface (28) formed on it, suitable for coming into contact with said button (26), to keep it pressed when at least one person is sitting on said seat (10), **characterized in that** said seat (10) is fastened to said frame (12) through a hinge mechanism (14), so that said seat (10) can rotate with respect to said frame (12), said second lower portion (20) of said flexible U-shaped element (16) being fixedly connected to said frame (12) through the interposition of said hinge mechanism (14).

2. System according to claim 1, **characterized in that** said upper portion (18) and lower portion (20) of said flexible U-shaped element (16) are hinged around a pin (22) arranged horizontally inside the body of said flexible element (16).

3. System according to claim 1, **characterized in that** at least one elastic element (30) is arranged between said first upper portion (18) and said second lower portion (20) of said flexible U-shaped element (16), extending in a substantially vertical direction and that operates by compression between said upper portion (18) and lower portion (20) of said flexible element (16).

4. System according to claim 3, **characterized in that** said at least one elastic element (30) is made in the form of a torsion spring.

5. System according to claim 3, **characterized in that** said at least one elastic element (30) has a spindle (32) arranged passing straight through it, fastened to said upper portion (18) and lower portion (20) of said flexible element (16).

6. System according to claim 5, **characterized in that** said spindle (32) is fastened to said upper portion (18) and lower portion (20) of said flexible element (16) respectively through an adjustable stop nut (34, 36).

## Patentansprüche

1. System zum Detektieren des Insassen eines Fahrzeugsitzes (10), wobei innerhalb des Sitzes (10) zumindest ein flexibles U-förmiges Element (16) eingesetzt und entlang einer im Wesentlichen horizontalen Richtung angeordnet ist, wobei ein erster oberer Abschnitt (18) des flexiblen Elementes (16) fest mit dem Sitz (10) verbunden ist und ein zweiter unterer Abschnitt (20) des flexiblen Elementes (16) fest mit dem Rahmen (12) des Fahrzeugs verbunden ist, wobei der erste obere Abschnitt (18) des flexiblen Elements (16) zumindest ein daran befestigtes Schaltmittel (24) aufweist, von dem sich ein Knopf (26) vertikal abwärts auf den zweiten unteren Abschnitt (20) des flexiblen Elementes (16) weisend erstreckt, wobei der zweite untere Abschnitt (20) des flexiblen Elementes (16) eine geformte Anlagefläche (28), die daran ausgebildet ist, aufweist, die geeignet ist, mit dem Knopf (26) in Kontakt zu kommen, um diesen gedrückt zu halten, wenn zumindest eine Person auf dem Sitz (10) sitzt, **dadurch gekennzeichnet, dass** der Sitz (10) an dem Rahmen (12) durch einen Gelenkmechanismus (14) befestigt ist, so dass der Sitz (10) sich in Bezug auf den Rahmen (12) drehen kann, wobei der zweite untere Abschnitt (20) des flexiblen U-förmigen Elementes (16) durch die Zwischenschaltung des Gelenkmechanismus (14) fest mit dem Rahmen (12) verbunden ist.

2. System nach Anspruch 1,
**dadurch gekennzeichnet, dass** der obere Abschnitt (18) und der untere Abschnitt (20) des flexiblen U-förmigen Elementes (16) um einen Stift (22) angelenkt sind, der horizontal innerhalb des Körpers des flexiblen Elementes (16) angeordnet ist.

3. System nach Anspruch 1,
**dadurch gekennzeichnet, dass** zumindest ein elastisches Element (30) zwischen dem ersten oberen Abschnitt (18) und dem zweiten unteren Abschnitt (20) des flexiblen U-förmigen Elementes (16) angeordnet ist, das sich in einer im Wesentlichen vertikalen Richtung erstreckt und das durch Kompression zwischen dem oberen Abschnitt (18) und dem unteren Abschnitt (20) des flexiblen Elementes (16) wirkt.

4. System nach Anspruch 3,
**dadurch gekennzeichnet, dass** das zumindest eine elastische Element (30) in der Form einer Torsionsfeder ausgebildet ist.

5. System nach Anspruch 3,
**dadurch gekennzeichnet, dass** das zumindest eine elastische Element (30) eine Spindel (32) aufweist, die durch dieses gerade hindurch verlaufend angeordnet ist und an dem oberen Abschnitt (18) und dem unteren Abschnitt (20) des flexiblen Elementes (16) befestigt ist.

6. System nach Anspruch 5,
**dadurch gekennzeichnet, dass** die Spindel (32) an dem oberen Abschnitt (18) und dem unteren Abschnitt (20) des flexiblen Elementes (16) jeweils durch eine einstellbare Stoppmutter (34, 36) befestigt ist.

## Revendications

1. Système de détection de l'occupant d'un siège de véhicule (10), dans lequel à l'intérieur dudit siège (10), au moins un élément en forme de U flexible (16) est inséré et agencé suivant une direction sensiblement horizontale, une première portion supérieure (18) dudit élément flexible (16) étant raccordée fixement audit siège (10) et une seconde portion inférieure (20) dudit élément flexible (16) étant raccordée fixement au châssis (12) dudit véhicule, ladite première portion supérieure (18) dudit élément flexible (16) ayant au moins un moyen de commutation (24) fixé à celui-ci, à partir duquel un bouton (26) s'étend verticalement vers le bas, tourné vers ladite seconde portion inférieure (20) dudit élément flexible (16), ladite seconde portion inférieure (20) dudit élément flexible (16) ayant une surface de butée façonnée (28) formée sur celle-ci, appropriée pour venir au contact dudit bouton (26), pour le maintenir enfoncé lorsqu'au moins une personne est assise sur ledit siège (10), **caractérisé en ce que** ledit siège (10) est fixé audit châssis (12) par le biais d'un mécanisme de charnière (14), de sorte que ledit siège (10) peut tourner par rapport audit châssis (12), ladite seconde portion inférieure (20) dudit élément en forme de U flexible (16) étant raccordée fixement audit châssis (12) par l'interposition dudit mécanisme de charnière (14).

2. Système selon la revendication 1, **caractérisé en ce que** ladite portion supérieure (18) et ladite portion inférieure (20) dudit élément en forme de U flexible (16) sont articulées autour d'une goupille (22) agencée horizontalement à l'intérieur du corps dudit élément flexible (16).

3. Système selon la revendication 1, **caractérisé en ce qu'**au moins un élément élastique (30) est agencé entre ladite première portion supérieure (18) et ladite seconde portion inférieure (20) dudit élément en forme de U flexible (16), s'étendant dans une direction sensiblement verticale et qui fonctionne par compression entre ladite portion supérieure (18) et ladite portion inférieure (20) dudit élément flexible (16).

4. Système selon la revendication 3, **caractérisé en ce que** ledit au moins un élément élastique (30) est constitué sous la forme d'un ressort de torsion.

5. Système selon la revendication 3, **caractérisé en ce que** ledit au moins un élément élastique (30) comporte une broche (32) agencée en le traversant en ligne droite, fixée à ladite portion supérieure (18) et à ladite portion inférieure (20) dudit élément flexible (16).

6. Système selon la revendication 5, **caractérisé en ce que** ladite broche (32) est fixée à ladite portion supérieure (18) et à ladite portion inférieure (20) dudit élément flexible (16) respectivement par le biais d'un écrou d'arrêt réglable (34, 36).
